# EUROPEAN PATENT APPLICATION

(11) **EP 2 466 854 A1**
(43) Date of publication of application: **20.06.2012**
(21) Application number: 10807880.9
(22) Date of filing: 21.04.2010
(51) Int. Cl.: H04L 29/08

(54) **MOBILE SEARCH METHOD AND SYSTEM THEREOF**

(30) Priority: 14.08.2009 CN 200910166153
(71) Applicant: ZTE Corporation, Shenzhen, Guangdong 518057 (CN)
(72) Inventor: PENG, Jin, Guangdong 518057 (CN)
(74) Representative: Andersen, Bjørn Subramaniam
(86) International application number: PCT/CN2010/071980
(87) International publication number: WO 2011/017935

(57) **Abstract**

The present invention aims to overcome the problem in the prior art that a mobile search server can only access the search engines registered with it but cannot access the search engines registered with other mobile search servers. A method for mobile search is proposed in the present invention, which comprises the following steps: a first mobile search server forwarding a search request to a second mobile search server; and the second mobile search server selecting a search engine, obtaining a result from the selected search engine, and returning the result back to the first mobile search server. In addition, a corresponding method and system are further proposed in the present invention.

## Description

### Field of the Invention

The present invention relates to the communication field, and in particular to a method and a system for mobile search.

### Background of the Invention

Mobile search refers to the search for information on the Internet and the telecommunication networks by taking a mobile device such as mobile phone, PDA, etc. as a terminal, in an access mode of short message, voice or WAP, etc. Many vertical search engines and professional database search engines are already present on the Internet and the telecommunication networks. In order to take advantage of the search ability of these existing search engines, a meta search mode is utilized in mobile search. That is, a mobile search server is constructed to receive a search request from a search requester, to forward the search request to a search engine, to receive a search result returned from the search engine, and to return the search result back to the search requester.

In the meta search mode, the search server can forward the search request to a plurality of search engines for processing, thus achieving the object of taking advantage of existing search engines. The above search requester can be a mobile terminal device or a mobile search application server.

In a mobile search system based on the meta search mode, the search engines are registered with a search server and provide such information as their access interfaces, the belonging special fields and the like while registering. When a search request is received, the search server selects one or more suitable search engines according to the search request and the registered information of the search engines and then sends the search request to the selected search engine(s).

In the conventional art, the inventor has found that a plurality of search servers are present on the Internet and the telecommunication networks and each of them manages a plurality of search engines registered with it, and the request submitted by a user to a certain search server may not be well handled by the search engines to which this server belongs, while the search engine which can better handle the request is registered with another search server. Therefore, it is needed to solve the problem of accessing search engines across mobile search servers in the mobile search system based on the meta search mode.

### Summary of the Invention

The technical problem to be solved in the present invention is: to overcome the problem in the conventional art that a mobile search server can only access the search engines registered therewith but cannot access the search engines registered with other mobile search servers, and how to provide a method and a system for mobile search servers interconnection.

A method for mobile search is firstly provided according to one aspect of the present invention, which method comprises the following steps: a first mobile search server forwarding a search request to a second mobile search server; and the second mobile search server selecting a search engine, obtaining a result from the selected search engine, and returning the result back to the first mobile search server.

Furthermore, the first mobile search server receiving a search request from a mobile terminal device or a mobile search application server.

Furthermore, the search request sent by the mobile terminal device or the mobile search application server to the first mobile search server comprises a destination mobile search server parameter for designating one of a plurality of mobile search servers as the second mobile search server.

Furthermore, the search request is analyzed by the first mobile search server so as to determine the belonging category of the search request, which category is compared with the search categories of said plurality of mobile search servers, and the most matched mobile search server is selected as the second mobile search server.

Furthermore, after the second mobile search server returning the result back to the first mobile search server, the method further comprises: the first mobile search server filtering and ordering the result according to the user setting.

A method for mobile search is further provided according to another aspect of the present invention, which comprises the following steps: a first mobile search server selecting one of a plurality of mobile search servers as a second mobile search server and forwarding a search request to the second mobile search server; and the second mobile search server using the search engine connected thereto to search and obtain a result, and returning the result back to the first mobile search server.

Furthermore, the first mobile search server receives a search request from a mobile terminal device or a mobile search application server.

Furthermore, after the second mobile search server returning the result back to the first mobile search server, the method further comprises: the first mobile search server filtering and ordering said result according to the user setting.

A system for mobile search is further provided according to another aspect of the present invention, which comprises: a mobile search application server configured to send a search request; a first mobile search server connected to the mobile search application server, configured to receive the search request; and a second mobile search server including plural search engines, with the second mobile search server selecting one of the plural search engines to obtain a search result on the basis of the search request forwarded by the first mobile search server and returning the search result back to the mobile search application server via the first mobile search server.

Furthermore, a destination mobile search server parameter is included in the search request for designating one of a plurality of mobile search servers as the second mobile search server.

A method for mobile search is further provided according to still another aspect of the present invention, which comprises: a first node receiving a search request at least containing a first content and forwarding the search request to a second node; and the second node looking up the type of search engines registered with the second node on the basis of the first content, and selecting the search engine to obtain a search result and forwarding the searched result again to the first node if the first content is in a predetermined relation with the type of at least one search engine of the second node.

Furthermore, the predetermined relation at least comprises at least one of the followings: exact matching; and the matching rate reaching a predetermined threshold value.

A method for mobile search is further provided according to yet another aspect of the present invention, which comprises: a first node receiving a search request including at least first information and second information from a search requester, and the first node forwarding the search request to a second node on the basis of the first information; and the second node selecting at least one search engine of the second node on the basis of the second information, obtaining a search result through the at least one search engine, and forwarding the search result to the search requester via the first node..

Furthermore, the second information is a parameter of the second node, which at least comprises one of the followings: the address of the second node, the identification of the second node.

Furthermore, the search engine is registered with the first node or the second node, when registered with the first node, the first information is the indication for the second node to select one search engine and the desired search content, and when registered with the second node, the second information is the search content.

Compared to the conventional art, the mobile search method and system of the present invention can be used to support accessing search engines across mobile search servers, which makes a mobile search request able to be handled by the most suitable search engine, thus obtaining a search result which better meets user requirements and improving user satisfaction of the mobile search service.

### Brief Description of the Drawings

The drawings illustrated here provide a further understanding of the present invention and form a part of the present invention. The exemplary embodiments of the present invention and the description thereof are used to explain the present invention without unduly limiting the scope of the present invention, wherein:
Fig. 1 is a flow chart of a mobile search method according to an embodiment of the present invention; and
Fig. 2 is a block diagram of the structure of a mobile search system according to an embodiment of the present invention.

### Detailed Description of Embodiments

For better understanding the objects, technical solutions and advantages of the present invention, the present invention will now be further described in detail hereinafter in conjunction with drawings and embodiments. It should be understood that the particular embodiments of the present invention are described for purpose of illustration, not for limiting the present invention.

The implementation of the technical solutions will now be further described in detail hereinafter in conjunction with the drawing.

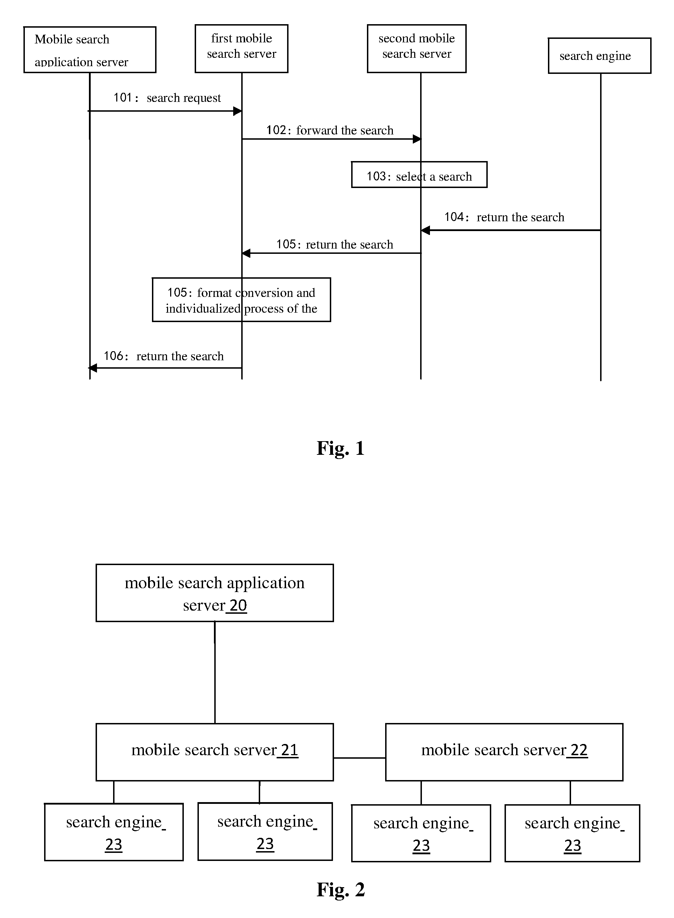

A mobile search method is firstly provided according to an embodiment of the present invention, and as shown in Fig. 1, the method mainly includes the following steps.

Step S101: A mobile search application server sends a search request (for example, search_term = "Wuzhou Hotel, Shenzhen") to a first mobile search server. The search request carries a destination mobile search server parameter (for example, Server = MSS2), and the mobile search server parameter, i.e. Server = MSS2, indicates that the search request is to be handled by a second mobile search server.

Step S102: The first mobile search server forwards the search request to the second mobile search server according to the search request parameter of the mobile search server parsed from the search request.

Step S103: The second mobile search server selects a search engine.

Assuming that the type of one of the search engines registered with the mobile search server is "hotel" and another one is "air ticket", then the second mobile search server selects in conjunction with the type of the search request the search engine the registered type of which is "hotel".

Step S104: The second mobile search server sends the search request to the search engine, and obtains a search result from the search engine.

Step S105: The second mobile search server returns the search result back to the first mobile search server. After obtaining the result, the mobile search server performs format conversion on the result according to the requirements of the mobile search application server, and then the first mobile search server performs customized process on the result in conjunction with user information.

Step S106: The first mobile search server returns the result back to the mobile search application server.

Through the above embodiment, accessing search engines across mobile search servers is achieved, which makes the mobile search request able to be handled by the most suitable search engine, thus obtaining a result which better meets user requirements.

A mobile search method is further provided according to an embodiment of the present invention, which method comprises:
firstly, a first node receiving a search request which at least contains a first content and forwarding the search request to a second node; then, the second node looking up the types of the search engines registered at the second node on the basis of the first content, and selecting a search engine to obtain a search result if the first content is in a predetermined relation with the type of at least one of the search engines of the second node; at last, obtaining the search result from said at least one search engine and forwarding it to the first node via the second node. Herein, the predetermined relation at least includes at least one of the following: exact matching; and the matching rate reaching a predetermined threshold value.

In practical applications, the first node and the second node are mobile search servers, and the above method is capable of achieving across-server search among at least two search servers, thus increasing the resource utilization rate of mobile search servers and improving user experience.

A mobile search method is further provided according to an embodiment of the present invention, which method comprises:
firstly, a first node receiving a search request which at least contains first information and second information from a search requester, and the first node forwarding the search request to a second node on the basis of the first information; then, the second node looking up at least one search engine of the second node on the basis of the second information, and selecting the search engine(s) to obtain a search result; at last, obtaining the search result from said at least one search engine and forwarding it to the search requester via the first node. Herein, the second information is the parameter of the second node which at least includes one of the following: the address of the second node and the identification of the second node. And the search engines are registered with the first node or the second node. When the search engines registered with the first node, the first information is the indication for the second node to select a search engine and the desired search content. When the search engines registered with the second node, the second information is the search content.

It is needed to note that in practical applications the first node and the second node are mobile search servers, and the above method is also capable of achieving across-server search among at least two search servers, thus increasing the resource utilization rate of mobile search servers and improving user experience.

A mobile search system is further provided according to an embodiment of the present invention. Fig. 2 is a block diagram of the structure of the mobile search server of the present invention, which server includes: a mobile search application server 20, a mobile search server 21, a mobile search server 22 and search engines 23.

The mobile search application server 20 is configured to send a search request to the mobile search server 21 and receive a search result from the mobile search server 21, in addition to providing application service for end users or other application systems.

The mobile search server 21 and the mobile search server 22 are connected to each other, and are configured to receive the search request from the search requester.

In practical applications, the search requester can be a mobile terminal device or a mobile search application server.

Preferably, when receiving the search request, the mobile search server 21 can send the search request to the search engines registered therewith and can also forward the search request to other mobile search servers, such as the mobile search server 22.

The mobile search server 22 receives the search result returned from the search engines or other search engines and returns the search result back to the mobile search engine 23 which forwards the search request to it.

The search engine 23 is configured to receive the search request from the mobile search server 22, obtain the search result and return the result back to the mobile search server 21.

Preferably, the mobile search application server 20 is connected to the mobile search server 21, and two search engines are registered with the mobile search server 21, therefore they are connected to the mobile search server 21. Another two search engines are registered with the mobile search server 22 and therefore connected to the mobile search server 22, and the mobile search server 21 is connected to the mobile search server 22.

In particular applications, the mobile search method can be used in the mobile search system. Through the mobile system, the across-search-server search can be achieved, the search range is expanded, and the possibility that nothing is found is reduced, thus improving user experience.

In summary, compared to the prior art, in the embodiments of the present invention, the access of search engines across mobile search servers can be supported by using the above mobile search method and system, which makes a mobile search request capable of being handled by the most suitable search engine, thus obtaining a search result which better meets user requirements and improving user satisfaction of the mobile search service.

Above description is only to illustrate the preferred embodiments but not to limit the present invention. Various alternations and changes to the present invention are apparent to those skilled in the art. The scope defined in claims shall comprise any modification, equivalent substitution and improvement within the spirit and principle of the present invention.

## Claims

1. A method for mobile search, **characterized in that** the method comprises:
a first mobile search server forwarding a search request to a second mobile search server; and
the second mobile search server selecting a search engine, obtaining a result from the selected search engine, and returning the result back to the first mobile search server.

2. The method according to claim 1, **characterized in that** the first mobile search server receiving the search request from a mobile terminal device or a mobile search application server.

3. The method according to claim 2, **characterized in that** the search request sent by the mobile terminal device or the mobile search application server to the first mobile search server comprises a destination mobile search server parameter for designating one of a plurality of mobile search servers as the second mobile search server.

4. The method according to claim 3, **characterized in that** the search request is analyzed by the first mobile search server so as to determine the belonging category of the search request, which category is compared with the search categories of said plurality of mobile search servers, and the most matched mobile search server is selected as the second mobile search server.

5. The method according to claim 4, **characterized in that** after the second mobile search server returning the result back to the first mobile search server, the method further comprises: the first mobile search server filtering and ordering the result according to the user setting.

6. A method for mobile search, **characterized in that** the method comprises:
a first mobile search server selecting one of a plurality of mobile search servers as a second mobile search server and forwarding a search request to the second mobile search server; and
the second mobile search server using the search engine connected thereto to search and obtain a result, and returning the result back to the first mobile search server.

7. The method according to claim 6, **characterized in that** the first mobile search server receives the search request from a mobile terminal device or a mobile search application server.

8. The method according to claim 7, **characterized in that** after the second mobile search server returning the result back to the first mobile search server, the method further comprises: the first mobile search server filtering and ordering said result according to the user setting.

9. A system for mobile search, **characterized in that** the system comprises:
a mobile search application server configured to send a search request;
a first mobile search server connected to the mobile search application server, configured to receive the search request; and
a second mobile search server including plural search engines, with the second mobile search server selecting one of the plural search engines to obtain a search result on the basis of the search request forwarded by the first mobile search server and returning the search result back to the mobile search application server via the first mobile search server.

10. The system according to claim 9, **characterized in that** a destination mobile search server parameter is included in the search request for designating one of a plurality of mobile search servers as the second mobile search server.

11. A method for mobile search, **characterized in that** the method comprises the following steps:
a first node receiving a search request at least containing a first content and forwarding the search request to a second node; and
the second node looking up the type of search engines registered with the second node on the basis of the first content, and selecting the search engine to obtain a search result and forwarding the searched result again to the first node if the first content is in a predetermined relation with the type of at least one search engine of the second node.

12. The method according to claim 11, **characterized in that** the predetermined relation at least comprises at least one of the followings: exact matching; and the matching rate reaching a predetermined threshold value.

13. A method for mobile search, **characterized in that** the method comprises the following steps:
a first node receiving a search request including at least first information and second information from a search requester, and the first node forwarding the search request to the second node on the basis of the first information; and
the second node selecting at least one search engine of the second node on the basis of the second information, obtaining a search result through the at least one search engine, and forwarding the search result to the search requester via the first node.

14. The method according to claim 13, **characterized in that** the second information is a parameter of the second node, which at least comprises one of the followings: the address of the second node, the identification of the second node.

15. The method according to claim 13 or 14, **characterized in that** wherein the search engine is registered with the first node or the second node, when registered with the first node, the first information is the indication for the second node to select one search engine and the desired search content, and when registered with the second node, the second information is the search content.
